# EUROPEAN PATENT SPECIFICATION

(11) **EP 2 157 342 B1**
(45) Date of publication and mention of the grant of the patent: **28.11.2018**
(21) Application number: 09380144.7
(22) Date of filing: 06.08.2009
(51) Int. Cl.: F16K 11/074, F16K 11/16, F16K 31/53, F16K 11/22

(54) **A device for opening and closing outlets of a fluid distributor valve**
Vorrichtung zum Öffnen und Schließen von Ausläufen eines Flüssigkeitsverteilerventils
Dispositif pour l'ouverture et la fermeture de sorties d'une valve de distribution de liquide

(30) Priority: 20.08.2008 ES 200802465
(43) Date of publication of application: 24.02.2010
(73) Proprietor: Sacopa, S.A., 17854 Sant Jaume de Llierca, Girona (ES)
(72) Inventor: Badosa Carbonés Marc, 17854 Saint Jaume de Llierca (Girona) (ES)
(74) Representative: Carpintero Lopez, Francisco

(56) References cited:
- EP-A- 1 344 879
- WO-A-2006/031018
- FR-A- 2 214 845
- US-A- 3 499 465
- US-A- 4 817 656

## Description

### Object of the invention

A device for opening and closing outlets of fluid distributor valves.

### Field of the invention

This device is preferably applied in valves that form part of a swimming pool bottom cleaning system, and which direct pressurised water to dispersal nozzles strategically located at the bottom of the pool.

### Background to the invention

There are different models of this kind of devices, which are housed in a chamber of the distributor valves comprising a body and a cover, said body having in its lower part a water inlet port and several water outlets comprising closure and opening members being actuated by means of a reducing gear acting by virtue of the action of the inflowing water on a rotor cooperating with said gear.

In these devices the opening and closing of the fluid outlets generally comprise moving covers that are articulated or sliding.

Precisely in European patent no. EP1344879 of the same applicant this type of system is described in which the opening and closing of the fluid outlet comprises moving covers that are angular sliding in opposite directions.

### Summary of the invention

The purpose of this invention is to improve this form of device with new bonnets fitted so that they do not suffer wear from the friction of the movements using simplified means for its operation. This is achieved by a device according to claim 1.

The feature of this device is the fact that the opening and closing of the water outlets is performed by rotating circular bonnets about a vertical axle fitted and provided with openings that are operated by means acting on its periphery determining its partial rotation.

Preferably, the means determining the rotation of the bonnets comprise lower lugs of a base bushing bearing the reducing gear operating on lugs provided on the edge of the bonnets.

The bonnets are conical and rest on circular plan bases bearing vertically the rotating axle the circular plan bases are also conical with openings; these circular bases occupy the outlets.

These and other characterising features will be best made apparent by the following detailed description whose understanding will be made easier by the accompanying sheet of drawings showing a practical embodiment being cited only by way of example not limiting the scope of the present invention.

### Description of the drawings

In the drawings:
Figure 1 is a perspective view of the body of the valve comprising the device object of this invention,
Figure 2 is a perspective view of the rotating bonnet, and
Figure 3 shows a perspective view of the base bushing operating on the bonnets.

### Description of the preferred embodiment

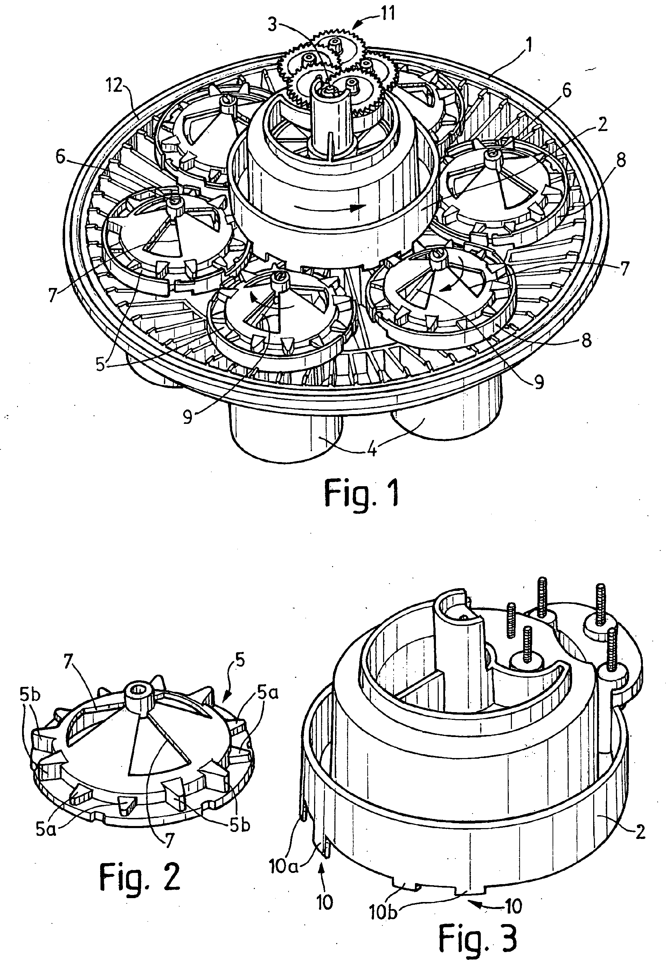

According to the drawings the device object of this invention is applied to a distribution valve comprising the circular body (1) in the centre of which there is the base rotating bushing (2) about a vertical axle (3) in which there is also a rotor (not visible) driven by the action of the water that enters the valve via a lower opening centrally located in the body (1), around said opening there are holes with a tubular outlet (4) that are blocked by seals comprising rotating circular bonnets (5) about a vertical axle (6) and provided with radial and angular openings (7), the bonnet of which are conical and rest on circular bearing bases (8) on the aforementioned axle (6) and which are also conical with openings (9), with these bases occupying the outlets.
These bonnets (5) are driven for their rotation by means that make them partially rotate to obtain the opening or closing of the outlets, which means comprise lower lugs (10) (figure 3) on the base bearing bushing (2) for the reducing gear (11) and that operate on lugs provided on the edge of the bonnets (5).

The lugs of the base bushing (2) comprise two pairs (10a) and (10b) of different height, and the lugs of the bonnets (5) comprise several pairs (5a) and (5b) also of different height.

During the operation, the upper lugs (10a) on the base bushing (2) push the lower lugs (5a) on the bonnet (5) closing it, and the lower lugs (10b) on the base bushing push the upper lugs (5b) of the bonnet.

The difference in height of the aforementioned lugs has been planned to prevent the incorrect placement of the bonnets that could affect the proper operation of the valve. In this embodiment, if the bonnets are fitted in any manner it will mean that they will be placed properly.

Reference (12) indicates the O-ring joint designed for the sealed coupling of the cover (not shown) comprising a pressure gauge and a purge outlet with a screw-in lid.

## Claims

1. A device for opening and closing outlets of a fluid distributor valve, the device comprising a body (1) having said outlets (4), and a cover housing a rotor for receiving the action of an inflowing fluid and being connected to a reducing gear (11) for activating the device, said outlets (4) being provided with respective circular plan bonnets (5) for closing and opening said outlets (4), said circular plan bonnets (5) being rotatable about a vertical axle (6) and provided with openings (7) which are operable by means that determine their partial rotation, **characterised in that** the bonnets (5) are conical and rest on circular plan bases (8) bearing vertically the rotating axle (6), said bases being also conical with openings (9), with these circular plan bases (8) occupying the outlets (4).

2. A device for opening and closing outlets of a fluid distributor valve, according to claim 1, **characterised in that** the means determining the rotation of the bonnets (5) comprise lower lugs (10a, 10b) of a base bushing (2) bearing the reducing gear (11) and operating on lugs (5a, 5b) provided on the edge of the bonnets (5).

3. A device for opening and closing outlets of a fluid distributor valve, according to claim 2, **characterised in that** the lugs (10a, 10b) on the base bushing (2) have two different heights and the lugs (5a, 5b) on the bonnets (5) have two different heights.

## Patentansprüche

1. Eine Vorrichtung zum Öffnen und Schließen von Ausläufern eines Fluidverteilerventils, wobei die Vorrichtung umfasst:
einen Körper (1), der die Ausläufer (4) besitzt, und
ein Gehäuse, in welchem ein Rotor zum Aufnehmen der Kraft eines einfließenden Fluids untergebracht ist, der mit einem Untersetzungsgetriebe (11) zum Aktivieren der Vorrichtung verbunden ist,
wobei die Ausläufe (4) entsprechend mit im Grundriss kreisförmigen Hauben (5) zum Schließen und Öffnen der Ausläufe (4) versehen sind, wobei die kreisförmigen Hauben (5) um eine vertikale Welle (6) drehbar sind und mit Öffnungen (7) versehen sind, die durch Mittel betätigt werden können, die ihre teilweise Drehung festlegen,
**dadurch gekennzeichnet, dass** die Hauben (5) konisch sind und auf im Grundriss kreisförmigen Sockeln (8) ruhen, auf denen die Drehwelle (6) vertikal gelagert ist,
wobei die Sockel ebenfalls konisch sind und Öffnungen (9) aufweisen, wobei die im Grundriss kreisförmigen Sockel (8) die Ausläufe (4) belegen.

2. Eine Vorrichtung zum Öffnen und Schließen von Ausläufern eines Flüssigkeitsverteilerventils gemäß Anspruch 1,
**dadurch gekennzeichnet, dass** die die Drehung der Hauben (5) festlegenden Mittel untere Vorsprünge (10a, 10b) einer Sockelbuchse (2) aufweisen, die das Untersetzungsgetriebe (11) lagert, und die auf Vorsprüngen (5a, 5b) betrieben werden, die an der Kante der Hauben (5) vorgesehen sind.

3. Eine Vorrichtung zum Öffnen und Schließen von Ausläufern eines Flüssigkeitsverteilerventils gemäß Anspruch 2,
**dadurch gekennzeichnet, dass** die Vorsprünge (10a, 10b) an der Sockelbuchse (2) zwei unterschiedliche Höhen besitzen, und dass die Vorsprünge (5a, 5b) der Hauben (5) zwei unterschiedliche Höhen besitzen.

## Revendications

1. Dispositif d'ouverture et de fermeture de sorties d'une valve de distribution de fluide, le dispositif comprenant un corps (1) ayant lesdites sorties (4), et un couvercle logeant un rotor pour recevoir l'action d'un fluide entrant et étant relié à un engrenage de réduction (11) pour activer le dispositif, lesdites sorties (4) étant pourvues de capots plans circulaires (5) respectifs pour fermer et ouvrir lesdites sorties (4), lesdits capots plans circulaires (5) pouvant tourner autour d'un axe vertical (6) et sont munis d'ouvertures (7) qui peuvent être actionnées par des moyens qui déterminent leur rotation partielle, **caractérisé par le fait que** les capots (5) sont coniques et reposent sur des bases planes circulaires (8) portant verticalement l'axe rotatif (6), lesdites bases étant également coniques avec des ouvertures (9), avec ces bases planes circulaires (8) occupant les sorties (4).

2. Dispositif d'ouverture et de fermeture de sorties d'une valve de distribution de fluide selon la revendication 1, **caractérisé par le fait que** les moyens déterminant la rotation des capots (5) comprennent des pattes inférieures (10a, 10b) d'une douille de base (2) portant l'engrenage de réduction (11) et fonctionnant sur des pattes (5a, 5b) prévues sur les bords des capots (5).

3. Dispositif d'ouverture et de fermeture de sorties d'une valve de distribution de fluide selon la revendication 2, **caractérisé par le fait que** les pattes (10a, 10b) sur la douille de base (2) ont deux hauteurs différentes et les pattes (5a, 5b) sur les capots (5) ont deux hauteurs différentes.
